# EUROPÄISCHE PATENTANMELDUNG

(11) **EP 3 581 255 A1**
(43) Veröffentlichungstag der Anmeldung: **18.12.2019**
(21) Anmeldenummer: 19180044.0
(22) Anmeldetag: 13.06.2019
(51) Int. Cl.: B01D 46/00, F01N 3/023, B01D 53/96

(54) **VERFAHREN ZUR REINIGUNG EINES KRAFTFAHRZEUGPARTIKELFILTERS**

(30) Priorität: 13.06.2018 DE 102018114163
(71) Anmelder: Free DPF UG (haftungsbeschränkt), 33449 Langenberg (DE)
(72) Erfinder: Marenin, Jacek, 59557 Lippstadt (DE)
(74) Vertreter: Schäperklaus, Jochen

(57) **Zusammenfassung**

Die Erfindung betrifft ein Verfahren zur Reinigung eines Kraftfahrzeugpartikelfilters (101), vorzugsweise eines Kraftfahrzeugdieselpartikelfilters, umfassend die folgenden Schritte:
- Einfüllen eines Reinigungsmittels in den Kraftfahrzeugpartikelfilter (101); und
- Erzeugung von Ultraschallwellen im Kraftfahrzeugpartikelfilter (101).

## Beschreibung

Die vorliegende Erfindung betrifft ein Verfahren zur Reinigung eines Kraftfahrzeugpartikelfilters gemäß Anspruch 1.

Aus offenkundiger Vorbenutzung sind Reinigungsverfahren für Kraftfahrzeugpartikelfilter bekannt. Es wird ein Reinigungsmittel in den Kraftfahrzeugpartikelfilter eingefüllt. Dort wirkt es über einen gewissen Zeitraum ein und löst Partikel aus dem Kraftfahrzeugpartikelfilter. Anschließend wird das Reinigungsmittel wieder abgelassen. Wenn der Motor des Kraftfahrzeugs gestartet wird, werden die gelösten Partikel aus der Abgasanlage des Kraftfahrzeugs ausgeblasen.

Demgegenüber liegt der vorliegenden Erfindung die Aufgabe zugrunde, ein Verfahren zu schaffen, mit dem mehr Partikel aus dem Kraftfahrzeugpartikelfilter gelöst werden. Außerdem sollen eine Vorrichtung zur Durchführung eines solchen Verfahrens, ein Behälter zur Verwendung in einer solchen Vorrichtung und ein System aus der Vorrichtung und dem Behälter geschaffen werden.

Diese Aufgabe wird durch ein Verfahren gemäß Anspruch 1, eine Vorrichtung gemäß Anspruch 7, einen Behälter gemäß Anspruch 10 und ein System gemäß Anspruch 11 gelöst. Ausführungsformen der Erfindung sind in den abhängigen Ansprüchen angegeben.

Das Verfahren wird zur Reinigung eines Kraftfahrzeugpartikelfilters durchgeführt. Vorzugweise handelt es sich bei dem Kraftfahrzeugpartikelfilter um einen Kraftfahrzeugdieselpartikelfilter. Zunächst wird ein Reinigungsmittel in den Kraftfahrzeugpartikelfilter eingefüllt. Das Reinigungsmittel kann beispielsweise schaumförmig oder flüssig sein. Vorzugsweise handelt es sich um ein schaumförmiges Reinigungsmittel, das im Kraftfahrzeugpartikelfilter flüssig wird. Das Reinigungsmittel kann in den Kraftfahrzeugpartikelfilter über eine Ausnehmung eingefüllt werden, die beim bestimmungsgemäßen Betrieb des Kraftfahrzeugs für ein anderes Bauteil wie beispielsweise eine Lambda-Sonde, einen Drucksensor oder einen Temperatursensor verwendet wird. Das entsprechende Bauteil kann aus der Ausnehmung entfernt werden. Anschließend kann das Reinigungsmittel in den Kraftfahrzeugpartikelfilter eingefüllt werden.

Nach dem Einfüllen des Reinigungsmittels werden Ultraschallwellen im Kraftfahrzeugpartikelfilter erzeugt. Durch die Kombination aus Reinigungsmittel und Ultraschallwellen werden besonders viele Partikel aus dem Kraftfahrzeugpartikelfilter gelöst.

Nach einer ausreichenden Einwirkdauer kann das Reinigungsmittel aus dem Kraftfahrzeugpartikelfilter entfernt werden und die Erzeugung der Ultraschallwellen eingestellt werden. Wenn der Motor des Kraftfahrzeugs, in dem der Kraftfahrzeugpartikelfilter eingebaut ist, gestartet wird, werden die gelösten Partikel an die Umwelt abgegeben. Dies erfolgt vorzugsweise über die Abgasanlage des Kraftfahrzeugs. Vorzugsweise wird der Motor während dieses Vorgangs auf ungefähr 2.000 Umdrehungen pro Minute beschleunigt.

Nach erfolgter Reinigung kann ein Steuergerät des Kraftfahrzeugs aktualisiert werden, indem ein Signal an das Steuergerät übertragen wird, das einen Hinweis darauf umfasst, dass der Kraftfahrzeugpartikelfilter gereinigt worden ist.

Nach einer Ausführungsform der Erfindung können die Ultraschallwellen durch einen am Kraftfahrzeugpartikelfilter angeordneten Piezoaktor erzeugt werden. Unter einem Piezoaktor wird dabei im Rahmen dieser Beschreibung insbesondere ein Element verstanden, das den piezoelektrischen Effekt ausnutzt, um die Ultraschallwellen zu erzeugen. Es kann sich dabei beispielsweise um einen piezoelektrischen Quarz oder um eine piezoelektrische Keramik handeln. Der Piezoaktor kann beispielsweise am Kraftfahrzeugpartikelfilter lösbar befestigt werden. Unter einer lösbaren Befestigung wird dabei im Rahmen dieser Beschreibung eine Befestigung verstanden, die ohne Beschädigung des Kraftfahrzeugpartikelfilters und des Piezoaktors gelöst werden kann. Beispielsweise kann der Piezoaktor mit einem Gurt oder mit Magneten am Kraftfahrzeugpartikelfilter befestigt werden. Es ist auch möglich, dass mehrere Piezoaktoren für die Erzeugung der Ultraschallwellen verwendet werden.

Nach einer Ausführungsform der Erfindung können die Ultraschallwellen mit einer Leistung zwischen 50 und 1000 Watt erzeugt werden. Besonders vorteilhaft hat sich eine Leistung zwischen 100 und 600 Watt herausgestellt.

Nach einer Ausführungsform der Erfindung können die Ultraschallwellen während eines Zeitraums zwischen 15 und 45 Minuten erzeugt werden. Dieser Zeitraum hat sich als besonders vorteilhaft für ein gutes Verhältnis zwischen der Reinigungswirkung und dem Aufwand herausgestellt.

Nach einer Ausführungsform der Erfindung kann das Verfahren durchgeführt werden, während der Kraftfahrzeugpartikelfilter in einem Kraftfahrzeug eingebaut ist. Der Aufwand für die Reinigung ist somit gering, da der Kraftfahrzeugpartikelfilter nicht ausgebaut werden muss.

Nach einer Ausführungsform der Erfindung kann ein Motor des Kraftfahrzeugs, in dem der Kraftfahrzeugpartikelfilter eingebaut ist, eingeschaltet werden. Dies erfolgt vorzugsweise, nachdem das Reinigungsmittel eingefüllt und die Ultraschallwellen erzeugt wurden. Besonders bevorzugt ist es, wenn das Reinigungsmittel bereits aus dem Kraftfahrzeugpartikelfilter abgelassen worden ist und die Ultraschallwellen nicht mehr erzeugt werden.

Nach Einschalten des Motors treten aus dem Kraftfahrzeugpartikelfilter gelöste Partikel aus. Dies erfolgt meistens über die Abgasanlage des Kraftfahrzeugs. Diese Partikel können in einem Filtermittel gesammelt werden. Das Filtermittel kann beispielsweise über einen Schlauch mit der Abgasanlage des Kraftfahrzeugs verbunden sein. Das Filtermittel kann Bestandteil einer Absaugvorrichtung sein. Es ist beispielsweise möglich, dass ein Staubsauger mit der Abgasanlage des Kraftfahrzeugs verbunden wird und ein Filtermittel des Staubsaugers verwendet wird. Das Filtermittel kann anschließend entsorgt werden. Auf diese Weise wird verhindert, dass die gelösten Partikel in die Umwelt gelangen.

Die Vorrichtung gemäß Anspruch 7 ist dazu ausgebildet, ein Verfahren nach einer Ausführungsform der Erfindung auszuführen. Zu diesem Zweck kann die Vorrichtung ein Ultraschallerzeugungsmittel umfassen, das dazu ausgebildet ist, die Ultraschallwellen zu erzeugen. Das Ultraschallerzeugungsmittel kann beispielsweise einen oder mehrere Piezoaktoren umfassen. Die Vorrichtung kann auch Befestigungsmittel zur Befestigung der Piezoaktoren am Kraftfahrzeugpartikelfilter umfassen. Es ist auch möglich, dass die Vorrichtung das Filtermittel umfasst, in dem die gelösten Partikel gesammelt werden.

Nach einer Ausführungsform der Erfindung kann die Vorrichtung ein Diagnosemittel umfassen, das dazu ausgebildet ist, eine Belastung des Kraftfahrzeugpartikelfilters mit Partikeln aus einem Steuergerät des Kraftfahrzeugs, in dem der Kraftfahrzeugpartikelfilter eingebaut ist, auszulesen. Somit wird eine Möglichkeit geschaffen, sowohl vor als auch nach Durchführung des Verfahrens, die Belastung auszulesen, um zu ermitteln, wie erfolgreich die Reinigung erfolgt ist.

Nach einer Ausführungsform der Erfindung kann die Vorrichtung tragbar und/oder rollbar sein. Darunter wird im Rahmen dieser Beschreibung insbesondere verstanden, dass die Vorrichtung durch eine einzige Person getragen oder gerollt werden kann. Beispielsweise kann die Vorrichtung hierfür Haltegriffe und/oder Rollen und/oder Räder umfassen.

Der Behälter nach Anspruch 10 ist zur Verwendung in einer Vorrichtung nach einer Ausführungsform der Erfindung ausgelegt. Er enthält das Reinigungsmittel, das in den Kraftfahrzeugpartikelfilter eingefüllt wird. Bei dem Behälter kann es sich beispielsweise um eine Dose handeln.

Das System nach Anspruch 11 umfasst eine Vorrichtung nach einer Ausführungsform der Erfindung und einen Behälter nach einer Ausführungsform der Erfindung.

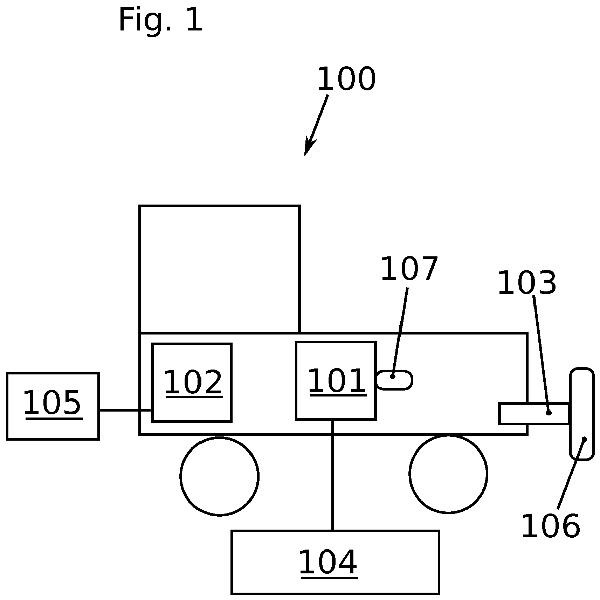

Weitere Merkmale und Vorteile der vorliegenden Erfindung werden deutlich anhand der nachfolgenden Beschreibung eines bevorzugten Ausführungsbeispiels unter Bezugnahme auf die beiliegende Abbildung. Darin zeigt
- Fig. 1: eine schematische Ansicht eines Kraftfahrzeugs und einer Vorrichtung nach einer Ausführungsform der Erfindung.

Das Kraftfahrzeug 100 umfasst einen Kraftfahrzeugpartikelfilter 101, ein Steuergerät 102 und eine Abgasanlage 103. Bevor mit der Reinigung des Kraftfahrzeugpartikelfilters 101 begonnen wird, kann zunächst ein elektronisches Datenverarbeitungsmittel 105 mit dem Steuergerät 102 des Kraftfahrzeugs 100 verbunden werden, um die Beladung des Kraftfahrzeugpartikelfilters 101 mit Partikeln auszulesen. Zu diesem Zweck umfasst das Datenverarbeitungsmittel 105 ein Diagnosemittel.

Zur Reinigung des Kraftfahrzeugpartikelfilters 101 wird ein Reinigungsmittel aus einem Behälter 104 in den Kraftfahrzeugpartikelfilter 101 eingefüllt. Dies kann beispielsweise durch eine bereits vorhandene Öffnung erfolgen. Hierfür eignet sich zum Beispiel die Öffnung, in der beim bestimmungsgemäßen Betrieb eine Lambda-Sonde des Kraftfahrzeugs, ein Drucksensor oder ein Temperatursensor angeordnet sind.

Am Kraftfahrzeugpartikelfilter 101 ist ein Piezoaktor 107 angeordnet, der zur Erzeugung von Ultraschallwellen im Kraftfahrzeugpartikelfilter 101 ausgebildet ist. Dieser Piezoaktor 107 wird mit einer Leistung zwischen 50 und 1000 Watt für einen Zeitraum zwischen 15 und 45 Minuten eingeschaltet. Besonders vorteilhafte Werte für die Leistung und den Zeitraum können durch Versuche für unterschiedliche Kraftfahrzeugpartikelfilter 101 ermittelt werden. Sie können bei unterschiedlichen Kraftfahrzeugen variieren.

Wenn der Zeitraum vorüber ist und der Piezoaktor 107 ausgeschaltet ist, kann das Reinigungsmittel aus dem Kraftfahrzeugpartikelfilter 101 abgelassen werden. Anschließend wird der Motor des Kraftfahrzeugs 100 gestartet. Die gelösten Partikel werden aus der Abgasanlage 103 des Kraftfahrzeugs 100 ausgeblasen und dort von einem Filter 106 aufgenommen, um eine Abgabe an die Umwelt zu vermeiden. Der Filter 106 kann beispielsweise mit einem Schlauch mit der Abgasanlage 103 verbunden sein.

Anschließend kann erneut die Belastung des Kraftfahrzeugpartikelfilters 101 durch das Datenverarbeitungsmittel 105 ausgelesen werden, um festzustellen, ob die Reinigung erfolgreich war. Bei einer erfolgreichen Reinigung kann über das Datenverarbeitungsmittel 105 ein Signal an das Steuergerät 102 ausgegeben werden, das einen Hinweis darauf umfasst, dass die Reinigung erfolgreich durchgeführt worden ist. Zu diesem Zweck umfasst das Datenverarbeitungsmittel 105 ein Signalausgabemittel.

## Patentansprüche

1. Verfahren zur Reinigung eines Kraftfahrzeugpartikelfilters (101), vorzugsweise eines Kraftfahrzeugdieselpartikelfilters, umfassend die folgenden Schritte:
- Einfüllen eines Reinigungsmittels in den Kraftfahrzeugpartikelfilter (101); und
- Erzeugung von Ultraschallwellen im Kraftfahrzeugpartikelfilter (101).

2. Verfahren nach Anspruch 1, **dadurch gekennzeichnet, dass** die Ultraschallwellen durch einen am Kraftfahrzeugpartikelfilter (101) angeordneten Piezoaktor (107) erzeugt werden.

3. Verfahren nach einem der vorherigen Ansprüche, **dadurch gekennzeichnet, dass** die Ultraschallwellen mit einer Leistung zwischen 50 und 1000 Watt erzeugt werden

4. Verfahren nach einem der vorherigen Ansprüche, **dadurch gekennzeichnet, dass** die Ultraschallwellen während eines Zeitraums zwischen 15 und 45 Minuten erzeugt werden.

5. Verfahren nach einem der vorherigen Ansprüche, **dadurch gekennzeichnet, dass** das Verfahren durchgeführt wird, während der Kraftfahrzeugpartikelfilter (101) in einem Kraftfahrzeug (100) eingebaut ist.

6. Verfahren nach einem der vorherigen Ansprüche, **dadurch gekennzeichnet, dass** ein Motor des Kraftfahrzeugs (100), in dem der Kraftfahrzeugpartikelfilter (101) eingebaut ist, eingeschaltet wird, wobei nach Einschaltung des Motors aus dem Kraftfahrzeug (100) austretende aus dem Kraftfahrzeugpartikelfilter (101) gelöste Partikel in einem Filtermittel (106) gesammelt werden.

7. Vorrichtung zur Reinigung eines Kraftfahrzeugpartikelfilters (101), vorzugsweise eines Kraftfahrzeugdieselpartikelfilters, wobei die Vorrichtung dazu ausgebildet ist, ein Verfahren nach einem der vorherigen Ansprüche auszuführen.

8. Vorrichtung nach dem vorherigen Anspruch, **dadurch gekennzeichnet, dass** die Vorrichtung ein Diagnosemittel umfasst, wobei das Diagnosemittel dazu ausgebildet ist, eine Belastung des Kraftfahrzeugpartikelfilters mit Partikeln aus einem Steuergerät (102) des Kraftfahrzeugs (100), in dem der Kraftfahrzeugpartikelfilter (101) eingebaut ist, auszulesen.

9. Vorrichtung nach einem der beiden vorherigen Ansprüche, **dadurch gekennzeichnet, dass** die Vorrichtung tragbar und/oder rollbar ist.

10. Behälter (104) zur Verwendung in einer Vorrichtung nach einer der drei vorherigen Ansprüche, **dadurch gekennzeichnet, dass** der Behälter (104) das Reinigungsmittel enthält.

11. System, umfassend eine Vorrichtung nach einem der Ansprüche 7 bis 9 und einen Behälter (104) nach dem vorherigen Anspruch.
